# EUROPÄISCHE PATENTSCHRIFT

(11) **EP 3 333 445 B1**
(45) Veröffentlichungstag und Bekanntmachung des Hinweises auf die Patenterteilung: **30.09.2020**
(21) Anmeldenummer: 17199156.5
(22) Anmeldetag: 30.10.2017
(51) Int. Cl.: F16D 69/02, C09K 3/14, B60T 17/22, F16D 65/00, F16D 69/04, F16D 69/00

(54) **BREMSBELAG, VERFAHREN ZUM HERSTELLEN EINES BREMSBELAGS UND KONDITIONIERVERFAHREN ZUR AKTIVIERUNG EINES BREMSBELAGS**
BRAKE LINING, METHOD OF MANUFACTURING A BRAKE LINING AND CONDITIONING METHOD FOR ACTIVATING A BRAKE LINING
GARNITURE DE FREIN, PROCÉDÉ DE FABRICATION D'UNE GARNITURE DE FREIN ET PROCÉDÉ DE CONDITIONNEMENT POUR L'ACTIVATION D'UNE GARNITURE DE FREIN

(30) Priorität: 31.10.2016 DE 102016120729
(43) Veröffentlichungstag der Anmeldung: 13.06.2018
(73) Patentinhaber: SAF-HOLLAND GmbH, 63856 Bessenbach (DE)
(72) Erfinder: Funk, Marco, 63500 Seligenstadt (DE); Hartmann, Mark, 63834 Sulzbach am Main (DE)
(74) Vertreter: Müller Schupfner & Partner Patent- und Rechtsanwaltspartnerschaft mbB

(56) Entgegenhaltungen:
- WO-A1-2013/182480
- DE-A1- 2 264 275
- DE-A1-102005 041 893
- DE-B4- 10 201 059
- US-A- 3 684 062

## Beschreibung

Die vorliegende Erfindung betrifft ein Bremsbelag einer Bremse, insbesondere für ein Nutzfahrzeug, und ein Verfahren zum Herstellen des Bremsbelags und eine Bremsbacke, die den Bremsbelag ausweist. Ferner betrifft die vorliegende Erfindung ein Konditionierverfahren zur, insbesondere thermischen oder mechanischen, Aktivierung eines Bremsbelages eines Nutzfahrzeuges sowie ein Nutzfahrzeug, welches zum Ausführen des Konditionierverfahrens ausgebildet ist.

Bremsbeläge für den Einsatz in einer Bremse eines Nutzfahrzeugs sind aus dem Stand der Technik hinlänglich bekannt. Es ist hinreichend bekannt, dass Bremsbeläge beispielsweise für den Einsatz in einer Trommel- oder einer Scheibenbremse hergestellt werden. Je nach Einsatz weist der Bremsbelag eine der Geometrie der entsprechenden Bremse angepasste Form auf. Der Bremsbelag selber ist üblicherweise in drei Schichten aufgebaut, welche verschiedene Funktionen erfüllen. Zu den Schichten zählen eine äußere Schicht, eine Bremsbelagmasseschicht, und eine Bindeschicht.

Die DE 22 64 275 A1 betrifft eine Reib-Paarung, bestehend aus einem Reibkörper aus organisch gebundenem Reibwerkstoff und aus einem metallischen Gegenreibkörper, wobei der Reibkörper auf seiner dem Gegenreibkörper zugewandten Seite eine dünne, schnell verschleißende, Einfahrschicht aufweist.

Die DE 10 2005 041 893 A1 betrifft ein Verfahren sowie eine Vorrichtung zur Herstellung von Reibkörpern. Derartige Reibkörper umfassen zumindest einen Reibbelagsträger und einen daran befestigten Reibbelag und werden mittels einer Presse gefertigt, die eine Presskammer und zumindest einen verschiebbaren Stempel aufweist.

Die DE 102 01 059 B4 zeigt einen Reibbelag für Scheibenbremsen, der ein erstes Reibbelagsmaterial mit einem bestimmten Reibwert und ein zweites Reibbelagsmaterial mit einem bestimmten Reibwert aufweist, der höher ist als der Reibwert des ersten Reibbelagsmaterials, wobei in dem ersten Reibbelagsmaterial eine Vielzahl von Vertiefungen gebildet sind, in denen das zweite Reibbelagsmaterial aufgenommen ist.

Die US 3 684 062 A zeigt eine Verbesserung von Bremsbelagszusammensetzungen für Fahrzeugbremsen oder ähnliches, umfassend Asbestfasern.

Die WO 2013/182480 A1 offenbart ein Verfahren zur Sicherstellung der Bremswirkung einer Bremse, insbesondere eines Nutzfahrzeugs, im Fahrbetrieb.

Die äußere Schicht wird oftmals als "Greencoating" bezeichnet und sorgt dafür, dass der Bremsbelag bei den ersten durchgeführten Bremsvorgängen bereits ein gewünschtes Reibverhalten aufweist, bevor die Bremsbelagmasse der Bremsbelagmasseschicht durch Bremsvorgänge thermisch oder mechanisch aktiviert werden konnte. Im montierten Zustand der Bremsbelageschicht in einer Bremse wird während eines Bremsvorganges die äußeres Schicht des Bremsbelages gegen eine Innenseite der Bremstrommel einer Trommelbremse oder gegen eine Bremsscheibe einer Scheibenbremse gepresst und im Verlaufe der Bremsvorgänge zunehmend abgetragen, so dass die Bremsbelagschicht zum Vorschein kommt. Außerdem wird durch jeden Bremsvorgang Wärmeenergie von der äußeren Schicht in die Bremsbelagmasseschicht (nachfolgend nur noch Bremsbelagmasse genannt) übertragen, so dass die übertragene Wärmeenergie zur thermischen oder mechanischen Aktivierung der Bremsbelagmasse dient. Bei wenigen Bremsvorgängen mit niedrigen Bremsmomenten kann es dazu kommen, dass die übertragene Wärmeenergie nicht ausreichend ist, um die Bremsbelagmasse thermisch oder mechanisch zu aktivieren. In diesem Fall bildet die Bremsbelagmasse nur einen geringen Reibwert an der Oberfläche des Bremsbelages aus, d.h. der Bremsbelag "verglast". Der Begriff der "Verglasung" ist bei Bremsbelägen hinlänglich bekannt.

Die Bremsbelagmasse ist üblicherweise die dickste Schicht und stellt ein Verschleißvolumen bereit, das nach einer erfolgreichen thermischen oder mechanischen Aktivierung durch die äußere Schicht ein gewünschtes Reib- und Verschleißverhalten aufweist. Im Laufe der durchgeführten Bremsvorgänge wird das Verschleißvolumen zunehmend durch die thermische und mechanische Belastung eines jeden Bremsvorganges abgetragen, bis das Verschleißvolumen aufgebraucht ist und möglicherweise die Bindeschicht sichtbar wird.

Die Bindeschicht ist nicht Teil des Verschleißvolumens, sondern dient einer Verbesserung der Anbindung der Bremsbelagmasse an eine Belagrückenplatte. Die Belagrückenplatte weist eine Belaganbindung auf, welche oft in Form eines Netzes oder von Gussgeometrien fest mit der Belagrückenplatte verbunden ist. Die Bindeschicht verbindet die Bremsbelagmasse mit der Belagrückplatte.

Problematisch ist es, wenn durch die ersten durchgeführten Bremsvorgänge nicht ausreichend Wärmeenergie erzeugt wird, welche zur thermischen oder mechanischen Aktivierung in die Bremsbelagmasse eingetragen wird, so dass in der Bremsbelagmasse nicht das gewünschte Reibverhalten ausgebildet werden kann. Im schlechtesten Fall ist die äußere Schicht bereits abgetragen, bevor die thermische oder mechanische Aktivierung der Bremsbelagmasse erfolgen konnte. In diesem Fall kommt es zur Verglasung des Bremsbelages. Dies kann dazu führen, dass das in Normen vorgegebene Reibverhalten nicht umgesetzt werden kann, oder der Verschleiß der Bremsbelagmasse zu schnell einhergeht.

Angesichts der soeben geschilderten Probleme ist die Aufgabe der vorliegenden Erfindung, einen Bremsbelag bereitzustellen, bei dem die thermische oder mechanische Aktivierung der Bremsbelagmasse verbessert ist. Ferner ist es die Aufgabe der vorliegenden Erfindung ein Verfahren zum Herstellen des Bremsbelags mit verbesserter Aktivierung sowie eine Bremsbacke mit einem solchen Bremsbelag bereitzustellen.

Diese Aufgaben werden gelöst mit einem Bremsbelag gemäß Anspruch 1, einer Bremsbacke und einem Verfahren zum Herstellen des Bremsbelags nach Anspruch 12. Weitere Vorteile und Merkmale der vorliegenden Erfindung ergeben sich aus den abhängigen Ansprüchen.

Erfindungsgemäß weist der Bremsbelag eine Bremsbelagmasse mit einem vorbstimmten Reibungskoeffizienten auf, welche nach einer, insbesondere thermischen oder mechanischen, Aktivierung ein gewünschtes Reib- und/oder Verschleißverhalten aufweist und ein Verschleißvolumen bereitstellt; und vorzugsweise eine unterhalb der Bremsbelagmasse angeordneten Bindeschicht zum Verbinden der Bremsbelagmasse mit einer Belagrückenplatte, wobei die Bremsbelagmasse mindestens einen Aktivierungsbereich mit einem die Aktivierung der Bremsbelagmasse unterstützenden Material aufweist. Zur Entfaltung des gewünschten bzw. vorbestimmten Reib- und/oder Verschleißverhaltens bedarf der Bremsbelag der thermischen oder mechanischen Aktivierung, damit sich ein gewünschter bzw. vorbestimmter Reibungskoeffizient der Bremsbelagmasse langfristig einstellt und sich somit ein gewünschtes Bremsverhalten des Nutzfahrzeuges, in dem der Bremsbelag verbaut ist, einstellt. Erfindungsgemäß ist in der Bremsbelagmasse mindestens ein Aktivierungsbereich vorgesehen, welcher ein die Aktivierung der Bremsbelagmasse unterstützendes Material aufweist oder enthält. Das unterstützende Material dient dazu, den Energieeintrag durch einen Bremsvorgang an die Bremsbelagmasse zu übertragen. Hierdurch wird die Bremsbelagmasse bei einem Bremsvorgang durch die dabei erzeugte Reibenergie und den damit verbundenen Energieübertrag in die Bremsbelagmasse aktiviert, wodurch sich das gewünschte Reib- und/oder Verschleißverhalten, insbesondere der Bremsbelagmasse, einstellt. Die Bremsbelagmasse weist vor der Aktivierung ein Reib- und Verschleißverhalten auf, welches unzureichend ist als nach der Aktivierung. Durch die Aktivierung wird mindestens eine Materialeigenschaft verändert, so dass die Bremsbelagmasse eine gewünschte Reibkraft zur Verfügung stellen kann. Der Vorteil des unterstützenden Materials liegt nun darin, dass dieses den Energieübertrag begünstigt, insbesondere wenn die Bremsmomente bei den Bremsvorgängen gering sind. Hierzu kann das unterstützende Material beispielsweise eine im Vergleich zu der Bremsbelagmasse höhere thermische Leitfähigkeit und/oder einen höheren Reibungskoeffizienten aufweisen. Vorzugsweise ist das Verhältnis des Reibungskoeffizienten der Bremsbelagmasse vor der Aktivierung zum Reibungskoeffizienten des unterstützenden Materials zwischen 0,4 bis 0,9, vorzugsweise 0,5 bis 0,7. Nach der Aktivierung können beide Reibungskoeffizienten sogar ähnlich groß sein.

Vorliegend sind die erfindungsgemäßen Bremsbeläge für den Einsatz in Nutzfahrzeugen, wie einem Straßen- oder Schienenfahrzeug geeignet. Unter dem Begriff Fahrzeug sind dabei nicht nur Fahrzeuge mit eigenen Antrieb zu verstehen, sondern auch Fahrzeuge ohne eigenen Antrieb, d.h. solche, die gezogen werden, beispielsweise Sattelanhänger oder Sattelauflieger, Deichselanhänger, Wagons oder dergleichen. Ferner ist der Begriff "unterhalb" so zu verstehen, dass im montierten Zustand des Bremsbelages in oder an einer Belagrückenplatte, die Belagrückenplatte für den Bremsbelag einen Boden bildet, über dem sich der Bremsbelag erstreckt. Der Ausdruck "unterhalb der Bremsbelagmasse" bedeutet folglich, dass sich im montierten Zustand unterhalb der Bremsbelagmasse die Belagrückenplatte befindet.

Bevorzugt weist das unterstützende Material einen, insbesondere von dem Rebungskoeffizienten der Bremsbelagmasse abweichenden, weiteren Reibungskoeffizienten auf und stellt eine Reibkraft ohne Aktivierung der Bremsbelagmasse bereit. Beispielsweise ist der Reibungskoeffizient des unterstützenden Materials größer als der Reibungskoeffizient der Bremsbelagmasse. Hierdurch wird erreicht, dass das unterstützende Material eine ausreichend große Reibkraft bereitstellen kann, noch bevor die Aktivierung der Bremsbelagmasse ausgeführt ist. Dies hat den Vorteil, dass eine gewisse Reibkraft schon bei den ersten Bremsvorgängen, welche beispielsweise ein niedriges Bremsmoment aufweisen, bereitgestellt werden kann. Das unterstützende Material kann Materialen aufweisen oder daraus gebildet sein, welche beispielsweise als "Greencoating" bekannt sind. Es ist ferner denkbar, dass das unterstützende Material weitere Stoffe aufweist, welche den Reibungskoeffizienten des unterstützenden Materials in Summe erhöht oder erniedrigt.

Die, insbesondere thermische oder mechanische, Aktivierung erfolgt durch einen Bremsvorgang oder durch eine Mehrzahl von Bremsvorgängen. Dies hat den Vorteil, dass der Bremsbelag sich der Geometrie der Bremse oder der Bremsbacke, in der der Bremsbelag montiert ist, derart anpasst, dass das gewünschte Reib- und/oder Verschleißverhalten des Bremsbelags ausgebildet wird.

In einer Ausführungsform des Bremsbelags weist die Bremsbelagmasse das unterstützende Material in einer Mehrzahl an zueinander beabstandeten Aktivierungsbereichen auf. Bevorzugt sind die Aktivierungsbereiche parallel oder nicht parallel zueinander beabstandet. Es ist auch denkbar, dass die Aktivierungsbereiche teilweise parallel und teilweise nicht parallel zueinander ausgebildet sind. Insbesondere können sich zwei Aktivierungsbereiche schneiden, so dass der Aktivierungsbereich eine zwei- oder dreidimensionale Kontur in der Bremsbelagmasse aufweist. Dies hat den Vorteil dass sich der Aktivierungsbereich, der das unterstützende Material aufweist oder enthält, sich durch die gesamte Bremsbelagmasse erstrecken kann, wodurch eine Aktivierung der Bremsbelagmasse auch in einem Bereich nahe der Belagrückenplatte, insbesondere bei den letzten Bremsvorgängen, sicher gestellt werden kann.

In einer bevorzugten Ausführungsform ist eine Mehrzahl an Aktivierungsbereichen vorgesehen, welche in gleichmäßigen oder ungleichmäßigen Abständen in der Bremsbelagmasse angeordnet sind. Beispielsweise können im Bereich nahe der Belagrückenplatte die Aktivierungsbereiche zueinander einen größeren Abstand aufweisen, als in einem von der Belagrückenplatte entfernteren Bereich der Bremsbelagmasse, d.h. in einem Bereich der Oberfläche des Bremsbelages. Dies hat den Vorteil, dass ein Verschleiß der Bremsbelagmasse zwischen zwei Aktivierungsbereichen in einem von der Belagrückenplatte entfernteren Bereich reduziert ist. Eine Anordnung der Aktivierungsbereiche in gleichmäßigen Abständen hat den Vorteil, dass der Verschleiß über die gesamte Lebensdauer des Bremsbelags gleichmäßig verläuft und insgesamt durch die Aktivierungsbereiche reduziert ist. Durch die Aktivierungsbereiche wird die Lebensdauer des Bremsbelages insgesamt gesteigert.

In einer weiteren bevorzugten Ausführungsform sind die Aktivierungsbereiche in einer zueinander versetzten Anordnung angeordnet, insbesondere ist mindestens ein Aktivierungsbereich als Karbidschicht ausgebildet. Bevorzugt sind die Aktivierungsbereiche und die Bereiche, welche Bremsbelagmasse aufweisen, schachbrettmusterartig oder dergleichen angeordnet. Insbesondere sind die Aktivierungsbereiche in die Belagmasse nicht flächig durchgehend eingebracht, sondern weisen Unterbrechungen durch die Bremsbelagmasse auf. Auf diese Weise können Trennschichten, welche Aktivierungsbereiche oder einen Aktivierungsbereich aufweisen, in der Bremsbelagmasse, welche sich durch Bremsvorgänge abträgt, ausgebildet sein. Eine Trennschicht hat den Vorteil, dass eine saubere Abtrennung der abzutragenden Bremsbelagschicht erfolgt, wodurch der Bremsbelag eine neuwertige Oberfläche aufweist, nachdem diese durch die davor gelagerte Aktivierungsschicht aktiviert worden ist. Durch die versetzte Anordnung wird vorteilhafterweise erreicht, dass sich keine durchgehende flächige Schicht der Bremsbelagmasse bei Erreichen des als Trennschicht wirkenden Aktivierungsbereiches ablöst, sondern nur Segmente der Bremsbelagmasse.

Bevorzugt sind die Aktivierungsbereiche in Form von Schichten oder Linien oder Plättchen bzw. Flächenabschnitten ausgebildet. Die Aktivierungsbereiche können somit unterschiedliche Dicken und Längen aufweisen. Je dicker eine Aktivierungsschicht ausgebildet ist, desto mehr Aktivierungsenergie stellt diese für die Aktivierung der Bremsbelagmasse bereit. Je länger ein Aktivierungsbereich ausgebildet ist, desto größer ist der Kontaktbereich zwischen Aktivierungsbereich und Bremsbelagmasse, der zum Energieübertrag genutzt wird. Diese hat den Vorteil, dass der Wärmeeintrag mindestens teilweise über die Dicke oder teilweise über die Länge der Aktivierungsbereiche regulierbar ist.

Weiter bevorzugt sind die Aktivierungsbereiche in Form von, vorzugsweise unterschiedlichen, Pulvern, granularen Medien oder vorgefertigten sich zweidimensional oder dreidimensional erstreckenden Körpern ausgebildet. Beispielsweise weist ein Aktivierungsbereich ein Gemisch aus mindestens einem Pulver und mindestens einem granularen Medium auf. Dies hat beispielsweise den Vorteil, dass hierdurch die Dichte, die thermische Leitfähigkeit und/oder der Härtegrad der Aktivierungsschicht kontrolliert werden kann. Zudem ist es denkbar, dass zwei unterschiedliche Aktivierungsbereiche unterschiedliche Gemische aufweisen, und somit die Dichte und/oder die thermische Leitfähigkeit und/oder der Härtegrad der unterschiedlichen Aktivierungsbereiche variieren. Dies hat den Vorteil, dass der Energieübertrag von Aktivierungsbereich zu Aktivierungsbereich kontrollierbar variabel ist. Bevorzugt werden vorgefertigte, sich zweidimensional oder dreidimensional erstreckenden Körper, wie beispielsweise dreieckige, viereckige, polygonale Körper in die Bremsbelagmasse eingebracht. Beispielsweise kann der Körper die Form eines Prismas, eines Stern, eines Zylinders, oder dergleichen haben. Das Einbringen von vorgefertigten Körpern hat den Vorteil, dass die Aktivierungsbereiche gegenüber der Bremsbelagmasse abgrenzt sind, insbesondere einen scharfen Übergang aufweisen.

Bevorzugt weist der Bremsbelag eine Erstreckungsrichtung, entlang derer sich die Bremsbelagmasse und/oder der mindestens eine Aktivierungsbereich erstrecken, und eine Abtragsrichtung, entlang derer sich eine Dicke der Bremsbelagmasse und/oder des mindestens einen Aktivierungsbereiches erstrecken, auf, wobei das Verschleißvolumen in Abtragsrichtung mit zunehmenden Gebrauch des Bremsbelags abnimmt. Die Erstreckungsrichtung ist bevorzugt senkrecht zur Abtragsrichtung.

In einer bevorzugten Ausführungsform weist der mindestens eine Aktivierungsbereich ein Profil, insbesondere ein S-förmiges, ein bogenförmiges Profil, ein diagonales Profil oder dergleichen, auf, welches sich durch das Verschleißvolumen erstreckt. Das Profil erstreckt sich bevorzugt entlang der Erstreckungsrichtung und/oder entlang der Abtragsrichtung des Bremsbelages. Besonders bevorzugt erstreckt sich das Profil entlang der Erstreckungsrichtung und entlang einer Breite des Profils in Abtragsrichtung. Dabei ist es denkbar, dass die Breite des Profils, also die Erstreckung des Profils in Abtragsrichtung, entlang der Erstreckungsrichtung variiert. Das Ausbilden des Aktivierungsbereiches oder der Aktivierungsbereiche in Form eines Profils hat den Vorteil, dass der Bremsbelag mit einer vorbestimmten Bremscharakteristik ausgebildet ist und ein Teil des Aktivierungsbereiches bei jedem Bremsvorgang unterstützend zur Verfügung steht.

Gemäß einer bevorzugten Ausführungsform weist der mindestens eine Aktivierungsbereich gegenüber der Bremsbelagmasse einen unterschiedlichen Härtegrad und/oder eine unterschiedliche Wärmeleitfähigkeit auf. Bevorzugt weist der Aktivierungsbereich einen größeren oder gleichgroßen Härtegrad wie die Bremsbelagmasse auf. Insbesondere weist der Aktivierungsbereich eine höhere Wärmeleitfähigkeit auf, welche den Wärmeeintrag während eines Bremsvorganges begünstigt, insbesondere erhöht. Die Wärmeleitfähigkeit weist dabei höchstens einen vorbestimmten Maximalwert auf. Dies hat den Vorteil, dass der Energieeintrag in die Bremsbelagmasse über den Aktivierungsbereich beschränkt ist, so dass die Bremsbelagmasse vor Überhitzung geschützt wird. Einer Zerstörung der Bremsbelagmasse durch Überhitzen wird damit effektiv entgegengewirkt, insbesondere verhindert.

Besonders bevorzugt weisen die bzw. eine Vielzahl der Aktivierungsbereiche untereinander unterschiedliche Härtegrade und/oder unterschiedliche Wärmeleitfähigkeiten auf. Dies wird beispielsweise dadurch erreicht, dass dem unterstützenden Material ein oder mehrere den Härtegrad und/oder die Wärmeleitfähigkeit beeinflussendes oder veränderndes weiteres Material hinzugefügt ist. Dies hat den Vorteil, dass ein Bremsbelag mit einer bestimmten vorgegeben Bremscharakteristik ausgebildet werden kann.

In einer bevorzugten Ausführungsform weist der mindestens eine Aktivierungsbereich eine Aktivierungsbereichsdicke auf, welche konstant oder entlang einer Richtung, insbesondere der Erstreckungsrichtung, variiert. Ferner können beispielsweise ein Aktivierungsbereich in Form eins Profils ausgebildet sein und ein weiterer Aktivierungsbereich in Form von Linien und/oder Plättchen und/oder Schichten ausgebildet sein. Durch eine variierende Dicke kann eine in der Richtung, insbesondere der Erstreckungsrichtung variierenden Bremscharakteristik ausgebildet werden.

Erfindungsgemäß weist der Bremsbelag eine äußere Schicht mit einem vorbestimmten Reibungskoeffizienten auf, wobei die äußere Schicht dazu geeignet ist, bei, insbesondere ersten, Bremsvorgängen eine vorbestimmte erste Reibkraft zu erzeugen. Dies hat den Vorteil, dass bei noch nicht erfolgter thermischer Aktivierung ein ausreichender Reibwiderstand des Bremsbelags vorhanden ist. Ferner kann die äußere Schicht dazu verwendet werden, den Energieeintrag in die Bremsbelagmasse zu begünstigen. Dazu weist die äußere Schicht erfindungsgemäß einen Härtegrad und/oder eine Wärmeleitfähigkeit und/oder einen Reibungskoeffizienten auf, welcher/welche dem eines Aktivierungsbereiches entspricht.

Ein weiterer Aspekt kann eine Bremsbacke, mit einer Belagrückenplatte und einem Bremsbelag wie zuvor beschrieben, betreffen. Bremsbacken sind ein wesentlicher Bestandteil einer Bremse, insbesondere einer Trommelbremse. Die Bremsbacke ist Träger des Reibmaterials, welches durch die Bremsvorgänge zunehmend abgetragen wird. Die abnehmende Dicke des Reibmaterials wird durch einen Nachstellmechanismus der Bremse nachjustiert. Diese Nachjustierung ist nur solange möglich, wie ausreichend Reibmaterial zur Abtragung zur Verfügung steht. Ein Vorteil einer Bremsbacke mit dem erfindungsgemäßen Bremsbelag ist das die Lebensdauer der Bremsbacke erhöht ist. Der erfindungsgemäße Bremsbelag ist für die Verwendung in handelsüblichen Bremsbacken geeignet.

Ein weiterer Aspekt der Erfindung betrifft ein Verfahren zum Herstellen eines Bremsbelags einer Bremse, insbesondere für ein Nutzfahrzeug, wobei das Verfahren folgende Schritte umfasst: a) Einbringen einer Bremsbelagmasse in eine Presse; b) Anordnen eines Einbringmittels auf die Bremsbelagmasse, wobei das Einbringmittel mindestens einen Einbringbereich aufweist, in der ein eine Aktivierung unterstützendes Material eingebracht wird; c) Entfernen des Einbringmittels aus der Presse; d) anschließendes Ausformen der Bremsbelagmasse mit dem unterstützenden Material unter Druck und/oder Hitze. Bevorzugt sind sowohl die Belagmasse als auch das unterstützende Material jeweils in Form von Pulvern und/oder granularen Medien oder Gemischen aus beiden in die Presse einbringbar. Besonders bevorzugt ist das einen Aktivierungsbereich ausbildenden unterstützende Material auch als vorgefertigtes Profil, wie zuvor beschrieben, in die Presse einlegbar. Zu den möglichen Ausführungsformen der Aktivierungsschicht wird an dieser Stelle auf die Ausführungsformen in den Vorrichtungsansprüchen verwiesen. Ferner ist es denkbar, den das unterstützende Material umfassenden Aktivierungsbereich in flüssiger Form auf die Bremsbelagmasse aufzuspritzen, wobei die Flüssigkeit dann im Anschluss aushärtet.

Bevorzugt ist das Einbringmittel als eine Maske mit mindestens einer Maskenöffnung zum Ausbilden mindestens eines Maskenbereiches ausgebildet, in dem das unterstützende Material eingebracht wird, oder als eine Verdrängungsform zum Verdrängen der Bremsbelagmasse und zum Aufnehmen des unterstützenden Materials mit einem Aufnahmevolumen ausgebildet ist. In das Aufnahmevolumen der Verdrängungsform wird das unterstützende Material eingebracht, insbesondere in Form eines Pulvers und/oder eines granularen Mediums. Nach dem Einbringen des unterstützenden Materials wird das Einbringhilfemittel, insbesondere aus der Presse, entfernt. Anschließend wird dann die Bremsbelagmasse mit dem unterstützenden Material verpresst, insbesondere unter Wärmeeinwirkung verpresst. Bei einer bevorzugten Ausführungsform des Verfahrens wird statt der Ausführung der Schritte b) und c) mindestens ein vorgeformter Aktivierungsbereich, welcher das eine Aktivierung der Bremsbelagmasse unterstützendes Material umfasst, in die Presse eingebracht. Insbesondere kann ein Aktivierungsbereich auf oder in die Bremsbelagmasse eingespritzt werden, insbesondere bevor die Bremsbelagmasse verpresst wird. Dies hat den Vorteil, dass der mindestens eine Aktivierungsbereich mit einer beliebigen Form, insbesondere mit einem beliebigen Profil, ausgebildet werden kann. Ferner hat diese Art des Einbringens des oder der Aktivierungsbereiches/e den Vorteil, dass zwischen einem Aktivierungsbereich und der Bremsbelagmasse ein scharfer Übergang erzeugt werden kann. Beim Einbringen des unterstützenden Materials hingegen über das Einbringmittel kann, insbesondere beim Entfernen desselben, ein Übergangsbereich entstehen, in dem das unterstützende Material mit der Bremsbelagmasse vermischt sein kann.

Bei dem vorgeschlagenen Verfahren zum Herstellen eines Bremsbelags kann ein Einlegen der Belagrückenplatte optional durch ein Einbringen einer Verbindungsschicht zwischen der Bremsbelagmasse und der Belagrückenplatte ergänzt werden. Die Bremsbelagmasse kann in Form eines Pulvers in die Pressform eingebracht werden. Dies kann manuell, d.h. beispielsweise per Hand oder per Roboter, gestreut oder eingeblasen oder von einem Band gefördert werden oder dergleichen. In einem ersten Prozessschritt, einem sogenannten ersten Hub, bringt die Presse über ein entsprechend ausgeformtes Werkzeug einen Teil der eingebrachten Bremsbelagmasse in Form, wie hierin bereit beschrieben (siehe Darstellung 1). Das in Form bringen der Bremsbelagmasse kann bei geringem Druck und/oder Temperatur, wie beispielsweise Raumtemperatur, geschehen. Ein Pressen der Beläge findet in einem anschließenden zweiten Hub statt. Alternativ kann eine untere eingebrachte Schicht in der Presse bereits beim ersten Ausformen unter Druck und Temperaturerhöhung verpresst werden. Nachdem die gewünschte Form, beispielsweise ein Bogen nach oben oder unten gewölbt, eine Schräge oder ein S-Profil oder dergleichen, hergestellt wurde, wird eine Zwischenschicht zur Aktivierung der Bremsbelagmasse eingebracht. Eine solche Zwischenschicht umfasst das unterstützende Material. Das unterstützende Material kann aufgesprüht, getropft oder auch in Form eines Pulvers aufgebracht werden. Der verbleibende Raum bis zu einer Oberkante des Werkzeugs wird mit dem Pulver der Bremsbelagmasse verfüllt. Mit einem planen Stempel wird anschließend die gesamte Masse abschließend gepresst.

Ein weiterer Aspekt der Erfindung betrifft ein Konditionierverfahren zur, insbesondere thermischen oder mechanischen, Aktivierung eines Bremsbelages eines Nutzfahrzeuges, wobei das Nutzfahrzeug ein elektronisches Bremssystem mit mindestens einem Steuermodul zum Ausführen einer elektronisch gesteuerten Bremsung umfasst, wobei das Konditionierverfahren folgenden Schritt umfasst: Anlegen eines vorbestimmten Druckes an den Bremsbelag bei einem Ausführen der elektronisch gesteuerten Bremsung, wobei durch den vorbestimmten Druck eine vorbestimmte Reibtemperatur in den Bremsbelag zum Konditionieren eines vorbestimmten Reib- und/oder Verschleißverhaltens des Bremsbelages eingetragen wird. Durch das elektronische Bremssystem wird gezielt mindestens eine Bremsung der Bremse im Neuzustand bzw. des Bremsbelages im Neuzustand durchgeführt. Indem ein vorbestimmter Druck über das elektronische Bremssystem an den Bremsbelägen der Bremse angelegt wird, wird eine vorbestimmte Temperatur durch Reibung in den Bremsbelägen erzeugt, welche vorliegend mit Reibtemperatur bezeichnet ist. Durch das Erzeugen der Reibtemperatur werden die Bremsbeläge des Nutzfahrzeuges mechanisch und/oder thermisch aktiviert, so dass die Bremsbeläge ein vorbestimmtes Reib- und/oder Verschleißverhalten nach der Aktivierung aufweisen. Eine solche Aktivierung ist auch nach einer Erstaktivierung im Neuzustand durchführbar. Bevorzugt setzt sich der vorbestimmte Druck aus einem Anlegedruck und einen weiteren geringfügigen Druck zusammen. Der Anlegedruck ist hierbei ein Druck, welcher aufgebracht werden muss, um einen Kontakt zwischen den Bremsbelägen und der Bremsschreibe oder der Bremstrommel zu erzeugen. Der weitere geringfügige Druck ist jener Druck, welcher zur Erzeugung der Reibung zwischen den Bremsbelägen und der Bremsschreibe oder der Bremstrommel verantwortlich ist und damit zur Erzeugung der Reibtemperatur verwendet wird. Bevorzugt beträgt der weitere geringfügige Druck das 0,1facher bis 0,5-fache des Anlegedrucks, bevorzugt das 0,2-fache des Anlegedrucks. Das Konditionierverfahren hat den Vorteil, dass ein vorbestimmtes Reib- und/oder Verschleißverhalten in einem Neuzustand und auch nach einem Verschleiß, insbesondere nach Abtrag einer Bremsbelagschicht, gezielt einstellbar ist.

Bevorzugt wird bei dem Konditionierverfahren das Anlegen des vorbestimmten Druckes über das mindestens eine Steuermodul bei einer vorbestimmten Geschwindigkeit und/oder für die Dauer eines definierten Zeitintervalls ausgeführt. Hierdurch kann die Erzeugungs- und/oder Eintragdauer der Reibtemperatur in den Bremsbelag gesteuert werden. Bevorzugt beträgt die vorbestimmte Geschwindigkeit bis zu 50 Km/h, besonders bevorzugt bis zu 30 Km/h oder weniger. Die Dauer des definierten Zeitintervalls beträgt bevorzugt bis zu 5 Sekunden, besonders bevorzugt bis 1 Sekunde oder 2 Sekunden.

Gemäß einer bevorzugten Ausführungsform des Konditionierverfahrens wird die vorbestimmte Reibtemperatur mittels mindestens eines Sensors, insbesondere mittels eines Temperatur- oder eines Drucksensors, erfasst. Bevorzugt wird der von dem mindestens einen Sensor erfasste Wert an das mindestens eine Steuermodul weitergeleitet, so dass das Steuermodul den vorbestimmten Druck und/oder die Dauer des definierten Zeitintervalls gegebenenfalls reguliert, sofern eine zu geringe oder eine zu hohe Reibtemperatur in dem Bremsbelag eingetragen wird. Diese hat den Vorteil, dass mit Hilfe des vorgeschlagenen Konditionierverfahrens die Aktivierung in situ überprüft und gegebenenfalls geregelt werden kann. Hierdurch wird die Aktivierung des Bremsbelages jedenfalls sichergestellt.

Ein weiterer Aspekt der Erfindung betrifft ein Nutzfahrzeug mit einer Bremse und einem elektronischen Bremssystem zum Ausführen einer elektronisch gesteuerten Bremsung, wobei das elektronische Bremssystem mindesten ein Steuermodul umfasst, welches dazu konfiguriert ist, eine Bremsung gemäß einem Konditionierverfahren, welches zuvor beschrieben wurde, auszuführen.

Weitere Vorteile und Merkmale der vorliegenden Erfindung ergeben sich aus der nachfolgenden Beschreibung bevorzugter Ausführungsformen mit Bezug auf die beigefügten Figuren. Es versteht sich, dass einzelne in den jeweiligen Figuren gezeigte Ausführungsformen Merkmale aufweisen können, die auch in anderen Ausführungsformen zum Einsatz gelangen können, auch wenn dies nicht explizit genannt ist, und sofern dies nicht aufgrund technischer Gegebenheiten oder explizit ausgeschlossen wurde. Es zeigen:
- Fig. 1: eine Schnittansicht eines aus dem Stand der Technik bekannten Bremsbelags, welcher auf einer Belagrückenplatte montiert ist,
- Fig. 2: eine Schnittansicht des erfindungsgemäßen Bremsbelags, welcher auf einer Belagrückenplatte montiert ist,
- Fig. 3a: ein weiteres Ausführungsbeispiel einer Schnittansicht des erfindungsgemäßen Bremsbelags, welcher auf einer Belagrückenplatte montiert ist,
- Fig. 3b, c: zwei Draufsichten an zwei verschiedenen Schnittstellen zur Ansicht nach Fig. 3a,
- Fig. 4a-d: weitere Ausführungsbeispiele von Schnittansichten des erfindungsgemäßen Bremsbelags, welcher auf einer Belagrückenplatte montiert ist,
- Fig. 5a-d: weitere Ausführungsbeispiele von Schnittansichten des erfindungsgemäßen Bremsbelags, welcher auf einer Belagrückenplatte montiert ist,
- Fig. 6: ein weiteres Ausführungsbeispiel einer Schnittansicht des erfindungsgemäßen Bremsbelags, welcher auf einer Belagrückenplatte montiert ist,
- Fig. 7a-c: verschiedene Draufsichten des erfindungsgemäßen Bremsbelags, und
- Fig. 8: ein weiteres Ausführungsbeispiel einer Schnittansicht des erfindungsgemäßen Bremsbelags, welcher auf einer Belagrückenplatte montiert ist, und
- Fig. 9: ein schematisch dargestelltes Nutzfahrzeug, in welchem der vorgeschlagene Bremsbelag verbaut ist und zum Durchführen des vorgeschlagenen Konditionierverfahrens ausgebildet ist.
- Fig. 10a-f: ein schematisch dargestelltes Einbringen der Bremsbelagmasse (Figs. 10a-c), ein Verteilen der Bremsbelagmasse (Fig. 10d) sowie ein Einbringen des unterstützenden Materials in die Presse (Figs. 10e-f).

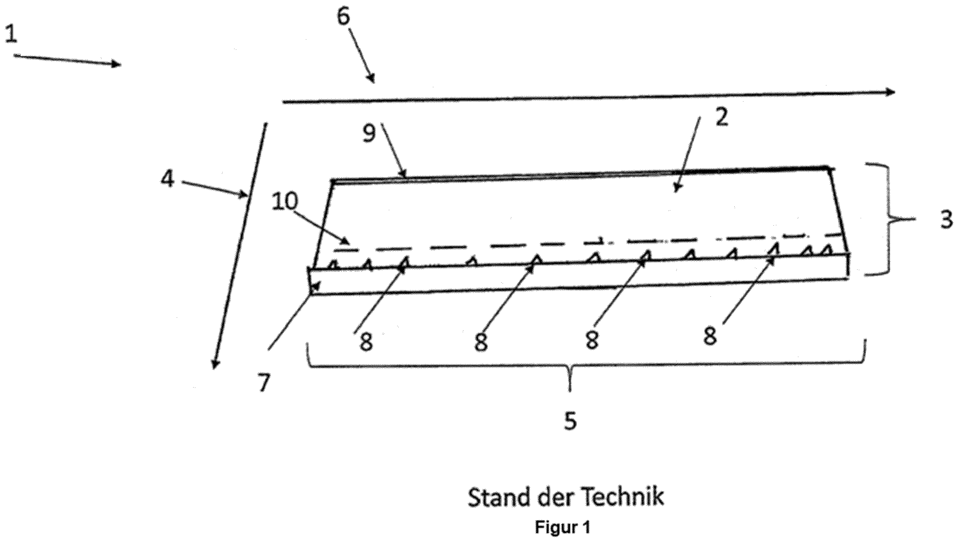

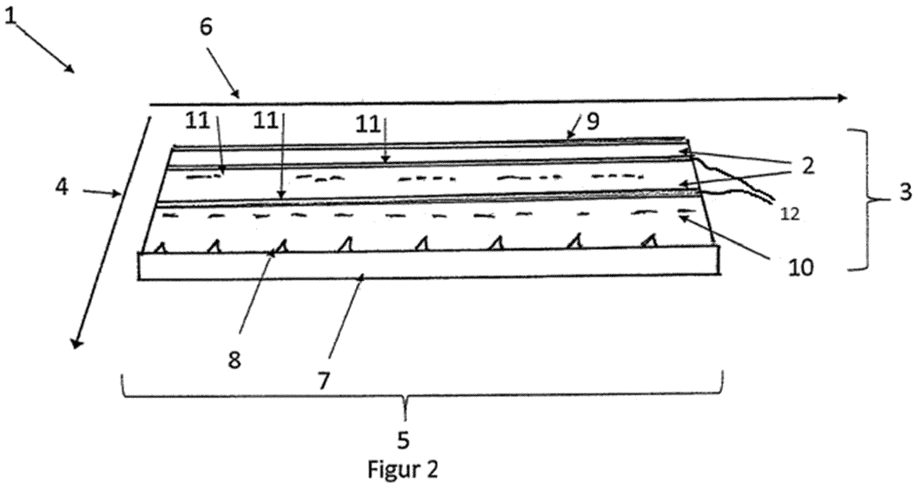

Die Fig. 1 zeigt eine schematische Schnittansicht eines aus dem Stand der Technik bekannten Bremsbelags 1. Die Figs. 2 bis 8 zeigen die vorteilhaften Ausführungsformen des erfindungsgemäßen Bremsbelags 1.

Der in der Fig. 1 dargestellt Bremsbelag 1 weist eine Bremsbelagmasse 2 auf, welche einer Dicke 3 entlang einer Abtragsrichtung 4 aufweist und sich senkrecht zur Abtragsrichtung 4 entlang einer Länge 5 in Erstreckungsrichtung 6 erstreckt. Die Bremsbelagmasse 2 stellt entlang ihrer Abtragsrichtung 4 ein Verschleißvolumen zur Verfügung, welches mit steigender Anzahl der Bremsvorgänge in Abtragsrichtung 4 reduziert wird, d.h. abgerieben oder abgetragen wird. Die Pfeilspitze in der Fig. 1 zeigt in Abtragsrichtung 4.

Die Bremsbelagmasse 2 ist auf einer Belagrückenplatte 7 montiert. Die Belagrückenplatte 7 ist mit einer Bremsbelaganbindung 8 ausgebildet, welche beispielsweise in Form eines Netzes oder von Gussgeometrien fest mit der Belagrückenplatte 7 verbunden ist. Der Bremsbelag 1 gemäß Fig. 1 weist ferner eine äußere Schicht 9 auf, welche als "Greencoating" bezeichnet wird. Die äußere Schicht 9 sorgt dafür, dass der Bremsbelag 1 bei den ersten durchgeführten Bremsvorgängen bereits ein gewünschtes Reibverhalten aufweist, bevor die Bremsbelagmasse 2, insbesondere thermisch oder mechanisch, aktiviert wurde. Zwischen der Bremsbelagmasse 2 und der Bremsbelaganbindung 8 ist vorzugsweise eine Bindeschicht 10 vorgesehen, welche der Verbesserung der Anbindung der Bremsbelagmasse 2 an die Belagrückenplatte 7 dient.

Vorteilhafte Ausführungsformen des erfindungsgemäßen Bremsbelags 1 werden in Zusammenschau mit den Figs. 2 bis 7c beschrieben, wobei gleiche Merkmale dasselbe Bezugszeichen erhalten. Insbesondere die Merkmale, welche bereits in Verbindung mit Fig. 1 beschrieben wurden, sind mit demselben Bezugszeichen versehen.

Ein erster erfindungsgemäßer Bremsbelag 1 gemäß Fig. 2 weist zusätzlich zu dem aus dem Stand der Technik bereits bekannten Bremsbelag 1 gemäß Fig. 1 mindestens einen Aktivierungsbereich 11 auf. Der in Fig. 2 dargestellte Bremsbelag weist drei Aktivierungsbereiche 11 auf, wobei zwei der drei Aktivierungsbereiche 11 in Form von durchgängigen Schichten entlang der Erstreckungsrichtung 6 ausgebildet sind und der sich zwischen diesen beiden Aktivierungssbereichen 11 angeordnete dritte Aktivierungsbereich 11 in Form von gestrichelten Linienbereichen entlang der Erstreckungsrichtung 6 ausgebildet ist. Im Sinne der technischen Lehre der Erfindung kann selbstverständlich auch eine andere Anordnung oder Abfolge der Aktivierungsbereiche 11 in der Bremsbelagmasse 2 vorgesehen sein. Die Aktivierungsbereiche 11 sind mit einem unterstützenden Material 12 gefüllt, wobei das unterstützende Material 12 die Aktivierung der Bremsbelagmasse 2 unterstützt. Die durch einen oder mehrere Bremsvorgänge erzeugte Reibenergie wird in Form von Wärmeenergie in die Bremsbelagmasse dissipiert, insbesondere durch die äußere Schicht 9 oder durch einen Aktivierungsbereich 11 wird die Aktivierung der Bremsbelagmasse unterstützt.

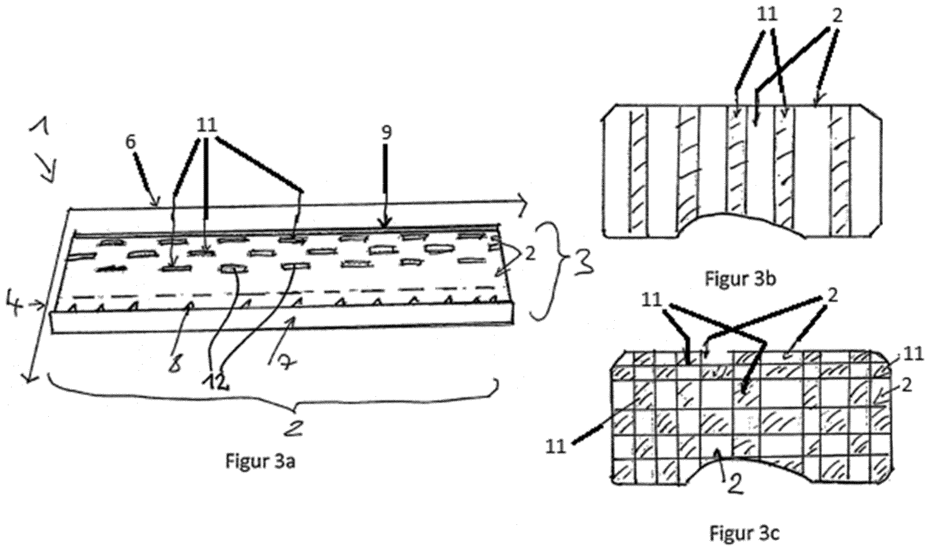

Die Fig. 3a zeigt eine weitere Ausführungsform des erfindungsgemäßen Bremsbelags, bei dem die mit dem unterstützenden Material 12 gefüllten Aktivierungsbreiche 11 schachbrettmusterartig in der Bremsbelagmasse 2 angeordnet sind. Auch bei dieser Ausführungsform ist eine Anordnung der Aktivierungsbreiche 11 entsprechend einem beliebigen anderen Muster von der technischen Lehre der Erfindung umfasst. Während die Fig. 3a eine Schnittansicht des Bremsbelags 1 zeigt, zeigen die Figs. 3b und 3c eine schematische Draufsicht auf den Bremsbelag 1, wobei Fig. 3b eine sich abwechselnde schichtenweise Anordnung der Bremsbelagmasse 2 und des Aktivierungsbereichs 11 zeigt und Fig. 3c ein schachbrettförmiges Muster, wobei die Flächen der einzelnen Felder des Schachbrettmusters einen variablen Flächeninhalt aufweisen. Denkbar ist es auch, dass der Flächeninhalt der Felder der Bremsbelagmasse 2 konstant ist und/oder der Flächeninhalt der Felder der Aktivierungsbereiche 11 konstant ist. Die Flächeninhalte der Felder der Bremsbelagmasse 2 und der Aktivierungsbereiche 11 können dabei gleich groß oder unterschiedlich groß sein.

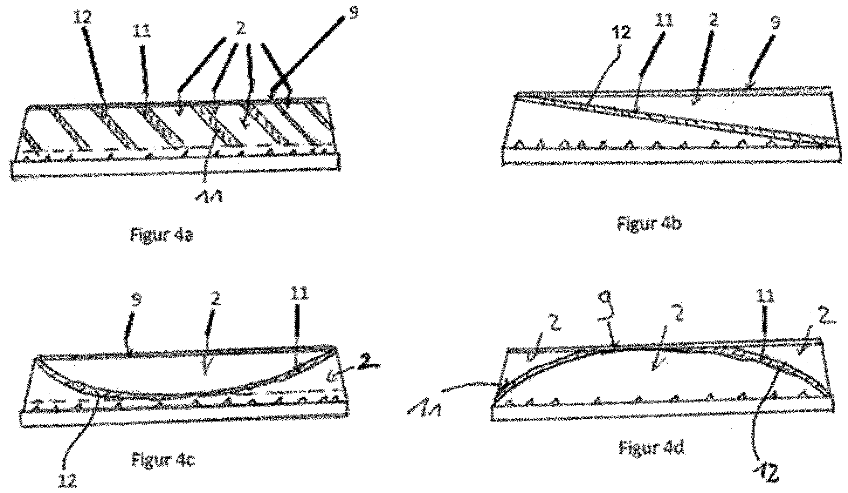

Die Figs. 4a bis 4c zeigen weitere Ausführungsformen des Bremsbelages 2 in einer Schnittansicht. Fig. 4a zeigt ein diagonal verlaufendes Streifenmuster der Aktivierungsbereiche, wobei diagonal verlaufend bedeutet, dass die Aktivierungsbereiche in Bezug auf die Abtragsrichtung 4 einen Winkel, insbesondere von im Wesentlichen 45°, einschließt und in Bezug auf die Erstreckungsrichtung 6 einen Winkel einschließt. Auch hier sind andere Winkel denkbar.

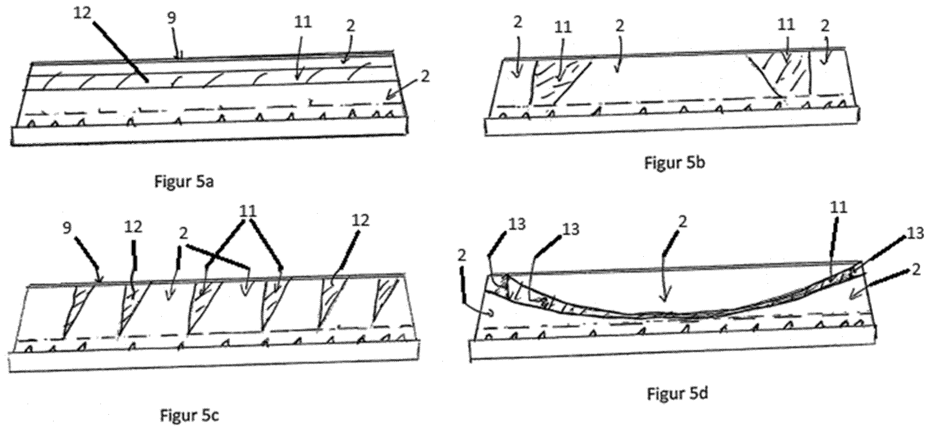

Fig. 4b zeigt einen einzigen Aktivierungsbereich 11, welcher sich quer über die Bremsbelagmasse 2 erstreckt, insbesondere in einem Winkel α zur Abtragrichtung 4 und in einem Winkel 90°- α in Erstreckungsrichtung 6. Die Figs. 4c und 4d zeigen den Aktivierungsbereich 11 in Form eines bogenförmigen Profils, welches sowohl in Erstreckungsrichtung 6 als auch in Abtragsrichtung 4 verläuft. Wie beispielsweise in Fig. 5d zu sehen ist, kann das Profil des Aktivierungsbereichs 11 eine variable Dicke 13, insbesondere in Richtung der Abtragsrichtung 4, aufweisen. Es ist ferner denkbar den Aktivierungsbereich 11 als eine flächige Schicht mit einer entlang der Erstreckungsrichtung 6 verlaufenden konstanten Dicke 13 (siehe Fig. 5a) oder als dreieckig- oder kegelstumpf-förmige Aktivierungsbereiche 11 auszubilden (Figs. 5b, 5c).

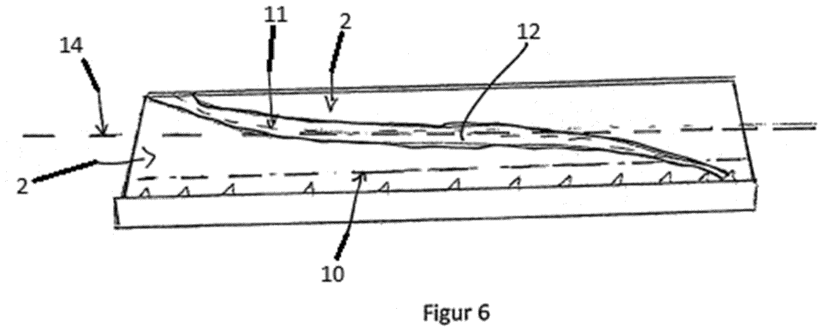

Die Ausführungsform gemäß Fig. 6 zeigt ein, im Wesentlichen S-förmiges, Profil des Aktivierungsbereiches 11, welches sich entlang der Erstreckungsrichtung 6 durch die Bremsbelagmasse 2 erstreckt. Bei Erreichen eines besonders kritischen Stadiums des Verschleißes des Bremsbelages 1 (siehe gestrichelte Linie 14) steht ein verhältnismäßig größerer Aktivierungsbereich 11 mit unterstützendem Material 12 zur Verfügung, um während eines Bremsvorganges eine ausreichend hohe Bremskraft aufbringen zu können, d.h. bei Erreichen des kritischen Stadiums 14 ist der Aktivierungsbereich entsprechend des erforderlichen Reibwertes größer ausgebildet. Anstelle eines S-förmigen Profils könnte eine beliebige andere Kontur in die Bremsbelagmasse 2 eingebracht werden, abhängig davon, an welcher gewünschten Stelle die Fläche des das unterstützende Material 12 aufweisende Aktivierungsbereiches 11 bevorzugt größer in Relation zur der Fläche der Bremsbelagmasse 2 ausgebildet sein soll.

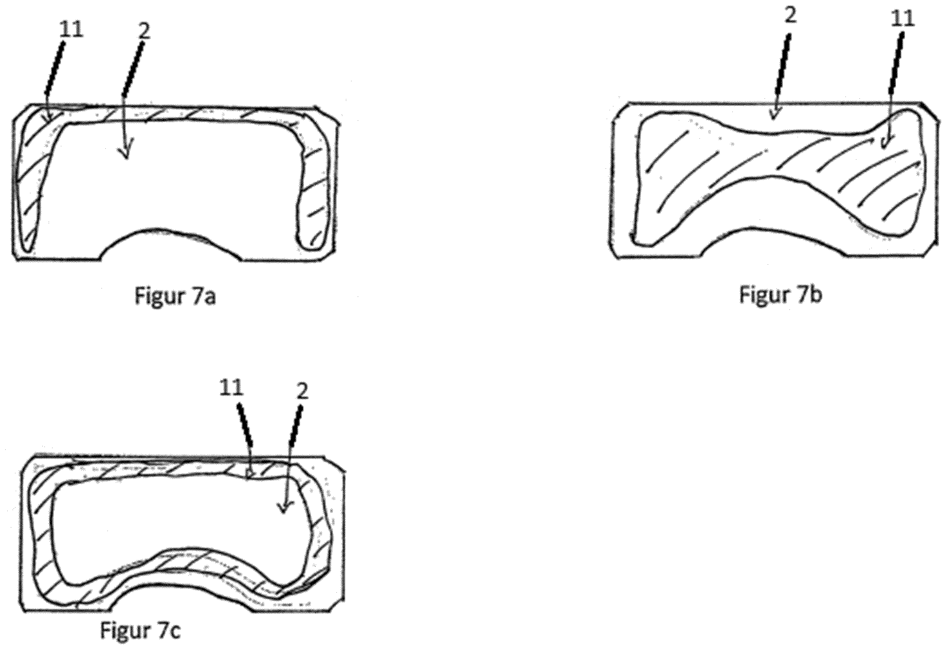

Die Figs. 7a bis 7c zeigen jeweils in einer Draufsicht verschiedene Ausführungsformen für die Anordnung des mindestens einen Aktivierungsbereiches 11. Es ist beispielsweise denkbar, dass diese drei Draufsichten drei von einer Mehrzahl an Draufsichten sind, die sich zu einem dreidimensionalen Profil, welches sich durch das Verschleißvolumen der Bremsbelagmasse 2 erstreckt, zusammenfügen.

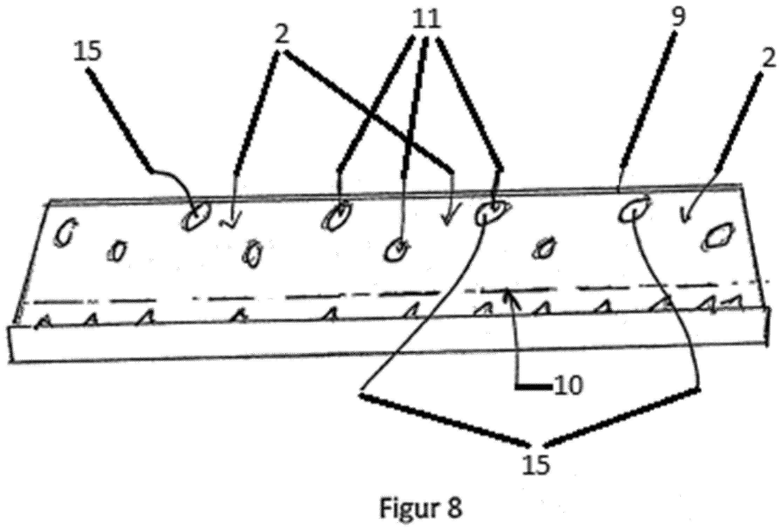

Fig. 8 zeigt ein weiteres Ausführungsbeispiel, in dem die Aktivierungsbereiche 11 in Form von in die Bremsbelagmasse 2 eingelegten Zylindern, welche das die Aktivierung unterstützende Material 12 umfassen, eingebracht sind. Selbstverständlich ist es denkbar Körper 15 wie beispielsweise Dreiecke, Vierecke, Polygone, Ovale, Prismen oder dergleichen als Aktivierungsbereiche einzuführen. Die Aktivierungsbereiche 11 in Form von eingebrachten Körpern 15 können massive Körper oder Hohlkörper sein. Während die Massivkörper auf Grund ihres Volumens eine größere Menge an Energie aufnehmen, können die Hohlkörper auf Grund ihres Oberflächen-zu-Volumen Verhältnisses einen größeren Energieübertrag an die Bremsbelagmasse 2 leisten. Es ist auch denkbar, Körper 15 verschieden Formen in die Bremsbelagmasse 2 einzubringen, insbesondere können Körper 15 und Aktivierungsschichten 11 gemäß einer der zu den Figs. 2-7c beschriebenen Art kombiniert werden.

Allen Ausführungsformen, welche unter Anderem den Figs. 2 bis 8 zu entnehmen sind, ist sind von der erfindungsgemäßen technischen Lösung umfasst, dass sie mindestens einen Aktivierungsbereich 11 aufweisen, welche das die Aktivierung unterstützende Material 12 umfasst.

Die Herstellung einer Ausführungsform des erfindungsgemäßen Bremsbelages 1 erfolgt, indem zunächst eine Bremsbelagmasse 2 in eine Presse (nicht dargestellt) eingebracht wird. Auf der Bremsbelagmasse 2 wird dann ein Einbringmittel (nicht dargestellt) angeordnet, wobei das Einbringmittel mindestens einen Einbringbereich aufweist, in der das die Aktivierung unterstützende Material eingebracht wird. Insbesondere ist das Einbringmittel in Form einer Maske, welche eine oder mehrere Maskenöffnungen aufweist, oder in Form von mindestens einem Verdrängungskörper zum Verdrängen der Bremsbelagmasse 2 ausgebildet. Der Verdrängungskörper umfasst mindestens einen Hohlraum zum Einfüllen des unterstützenden Materials 12. Das Volumen des Hohlraumes entspricht beispielsweise dem Volumen eines Aktivierungsbereiches 11. Ferner entspricht beispielsweise das Volumen oder die Fläche des Einbringbereichs der Maske einem Aktivierungsbereich 11. Vor dem Verpressen und nach dem Einbringen des unterstützenden Materials wird das Einbringmittel aus der Presse entfernt. Im Anschluss daran wird die Bremsbelagmasse 2 mit dem unterstützenden Material 12 unter Druck und/oder Hitze zum Bremsbelag 1 verpresst. Statt des Einbringmittels ist es ebenfalls denkbar, bereits mindestens einen vorgefertigten Aktivierungsbereich 11 in die Bremsbelagmasse einzulegen. Bevorzugt liegt die Bremsbelagmasse 2 als Pulver oder granulares Medium oder dergleichen vor, in das ein vorgefertigter oder nicht vorgefertigter Aktivierungsbereich 11 einfach eingebracht werden kann. Es ist auch denkbar, den Aktivierungsbereich 11 mit dem unterstützenden Material 12 auf die Bremsbelagmasse 2 aufzuspritzen. Der aufgespritzte Aktivierungsbereich 11 härtet aus und kann dann beispielsweise mit einer weiteren Schicht Bremsbelagmasse 2 bedeckt werden.

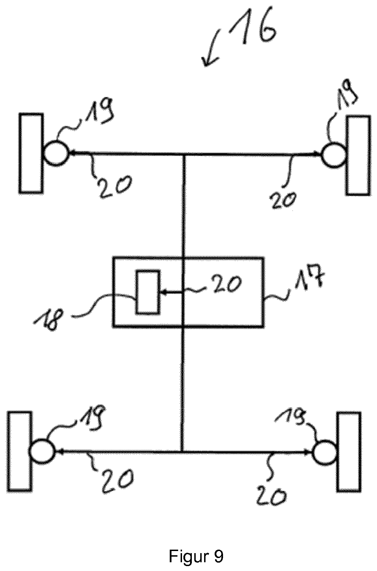

Nach Herstellung einer Ausführungsform des erfindungsgemäßen Bremsbelages 1 und dem Einbau eines solchen in einem Nutzfahrzeug 16 wird der Bremsbelag 1, insbesondere mechanisch und/oder thermisch, durch Ausführen eines Konditionierverfahrens aktiviert. Wie in Fig. 9 dargestellt, weist das Nutzfahrzeug 16 ein elektronisches Bremssystem 17 auf, welches mindestens ein Steuermodul 18 aufweist. An oder nahe den Bremsbelägen 1 ist jeweils mindestens ein Sensor 19 angeordnet, welcher die wegen der Reibung beim Bremsen entstehende Reibtemperatur erfasst. Der mindestens eine Sensor 19 kann als Temperatursensor oder als Drucksensor oder dergleichen ausgebildet sein. Wesentlich ist, dass ein mittels des mindestens einen Sensors 19 erfasster Wert einer Reibtemperatur zugeordnet werden kann. Der von dem mindestens einen Sensor 19 erfasste Wert wird an das Steuermodul 18 geleitet, welches durch die Doppelpfeile 20 angedeutet wird. In dem Steuermodul 18 ist mindestens eine Tabelle gespeichert, aus welcher zu einer Reibtemperatur eine dazugehörige Geschwindigkeit und/oder ein benötigtes definiertes Zeitintervall zum Anlegen eines vorbestimmten Druckes an den Bremsbelag 1 ausgelesen wird, um eine Aktivierung des Bremsbelages zu erreichen. Das Steuermodul 18 ist zum Auslesen der gespeicherten Tabelle und zum Auswerten des erfassten Sensorwertes geeignet. Stellt das Steuermodul 18 des elektronischen Bremssystems 17 fest, dass eine Aktivierung des Bremsbelages 1 nicht wie vorbestimmt durchgeführt wird, so ist das Steuermodul 18 konfiguriert, den vorbestimmten Druck und/oder die Dauer eines definierten Zeitfensters, während dessen der vorbestimmte Druck an dem Bremsbelag 1 angelegt ist, zu regulieren. Bevorzugt ist in dem Steuermodul 18 des elektronischen Bremssystems 17 zur Ausführung einer solchen Regulierung ein Computerprogram hinterlegt.

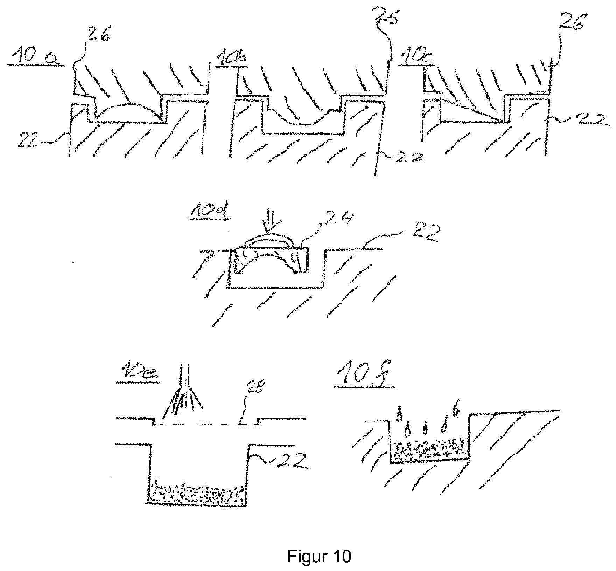

Einzelne Schritte des vorgeschlagenen Verfahrens zum Herstellen eines Bremsbelags sind in den Figuren 10a-f schematisch dargestellt. Bei dem Verfahren zum Herstellen eines Bremsbelags 1 kann ein Einlegen der Belagrückenplatte 7 optional durch ein Einbringen einer Bindesschicht 10 zwischen der Bremsbelagmasse 2 und der Belagrückenplatte 7 erfolgen oder ergänzt werden. Die Bremsbelagmasse 2 kann in Form eines Pulvers in die Pressform 22 eingebracht werden. Dies kann manuell, d.h. beispielsweise per Hand oder per Roboter, gestreut oder eingeblasen oder von einem Band gefördert werden oder dergleichen und anschließend beispielsweise mit einem Werkzeug 24 manuell oder mit einem angesteuerten Werkzeug 26 in der Presse 22 verteilt werden (Fig. 10a-d). In einem ersten Prozessschritt, einen sogenannten ersten Hub, wird in der Presse 22 bzw. in der Pressform 22 über ein entsprechend ausgeformtes Werkzeug 24, 26 zumindest ein Teil der eingebrachten Bremsbelagmasse 2 in Form gebracht, wie hierin bereits beschrieben (siehe Figs 10 a-d). Das in Form bringen der Bremsbelagmasse 2 kann bei geringem Druck und/oder bei einer Temperatur, wie beispielsweise bis zu 28°C oder einer anderen Temperatur, geschehen. Das Ausformen des gewünschten Profils kann beispielsweise bei bis zu 28°C unter Benutzung eines handgeführten Werkzeugs 24 durch einen Bediener erstellt werden (Fig. 10d).

Ein Pressen der Bremsbelagmasse 2 und/oder des unterstützenden Materials 12 findet in einem anschließenden zweiten Hub bzw. einem weiteren Prozessschitt statt. Alternativ kann eine untere eingebrachte Schicht in der Presse 22 bereits beim ersten Ausformen unter Druck und bei einer Temperaturerhöhung verpresst werden. Nachdem die gewünschte Form beispielsweise ein Bogen nach oben oder unten gewölbt (Fig. 10a), eine Schräge (Fig. 10c) oder ein S-Profil (Fig. 10b) oder dergleichen hergestellt wurde, wird eine Zwischenschicht, d.h. das unterstützende Material 12, zur Aktivierung der Bremsbelagmasse 2 eingebracht. Eine solche Zwischenschicht umfasst das unterstützende Material 12. Das unterstützende Material 12 kann aufgesprüht (Fig. 10e), getropft (Fig. 10f) oder auch in Form eines Pulvers aufgebracht werden. Der verbleibende Raum bis zu einer Oberkante des Werkzeugs 24, 26 wird mit dem Pulver der Bremsbelagmasse 2 gefüllt. Mit einem planen Stempel (nicht gezeigt) wird anschließend die gesamte Masse umfassend die Bremsbelagmasse 2 und das unterstützende Material 12 abschließend gepresst.

Alternativ kann auch manuell per Hand eine entsprechende Geometrie des unterstützenden Materials 12 ausgeformt werden.

Die Aktivierungsschicht bzw. Das unterstützende Material 12 kann in flüssiger Form durch einfaches Eingießen durch eine Blende 28, Auftropfen (Fig. 10 f) oder Sprühen (Fig. 10e), beispielsweise durch die Blende 28, aufgebracht werden.

Durch Verwendung eines entsprechenden Musters in der Blende 28 kann die Verteilung und Schichtstärke beeinflusst werden. Die Blende 28 kann als ein Sieb ausgebildet sein. Ein Sieb kann beispielsweise auch beim Einbringen einer Aktivierungsschicht in Form eines Pulvers zum Einsatz kommen.

Es versteht sich von selbst, dass die in den Figuren gezeigten Ausführungsformen lediglich einen Teil der unter die Erfindung fallenden möglichen Ausführungsformen abdecken kann. Unter die technische Lehre der Erfindung fällt insbesondere auch die Kombination der vorgestellten Ausführungsformen.

### Bezugezeichenliste:

- 1: Bremsbelag
- 2: Bremsbelagmasse
- 3: Dicke (der Bremsbelagmasse)
- 4: Abtragsrichtung
- 5: Länge (der Bremsbelagmasse)
- 6: Erstreckungsrichtung
- 7: Belagrückenplatte
- 8: Bremsbelaganbindung
- 9: äußere Schicht
- 10: Bindeschicht
- 11: Aktivierungsbereich
- 12: unterstützendes Material
- 13: Aktivierungsbereichsdicke
- 14: gestrichelte Linie
- 15: Körper
- 16: Nutzfahrzeug
- 17: elektronisches Bremssystem
- 18: Steuermodul
- 19: Sensor
- 20: Doppelpfeil
- 22: Presse bzw. Pressform
- 24: Werkzeug
- 26: Werkzeug
- 28: Blende

## Patentansprüche

1. Bremsbelag (1) einer Bremse, insbesondere für ein Nutzfahrzeug, aufweisend:
eine Bremsbelagmasse (2) mit einem vorbestimmten Reibungskoeffizienten, welche nach einer, insbesondere thermischen oder mechanischen, Aktivierung ein gewünschtes Reib- und/oder Verschleißverhalten aufweist und ein Verschleißvolumen bereitstellt; und
vorzugsweise eine unterhalb der Bremsbelagmasse (2) angeordneten Bindeschicht (10) zum Verbinden der Bremsbelagmasse (2) mit einer Belagrückenplatte (7),
- wobei die Bremsbelagmasse (2) mindestens einen Aktivierungsbereich (11) mit einem die Aktivierung der Bremsbelagmasse (2) unterstützenden Material (12) aufweist,
**dadurch gekennzeichnet, dass**
der Bremsbelag (1) zusätzlich eine äußere Schicht (9) mit einem vorbestimmten Reibungskoeffizienten aufweist,
wobei die äußere Schicht (9) dazu geeignet ist, bei, insbesondere ersten,
Bremsvorgängen eine vorbestimmte erste Reibkraft zu erzeugen,
wobei die äußere Schicht (9) einen Härtegrad und/oder eine Wärmeleitfähigkeit
und/oder einen Reibungskoeffizienten aufweist, welcher/welche dem des mindestens einen Aktivierungsbereiches (11) entspricht.

2. Bremsbelag (1) nach Anspruch 1, wobei das unterstützende Material (12) einen von dem Reibungskoeffizienten der Bremsbelagmasse (2) abweichenden weiteren Reibungskoeffizienten aufweist und eine Reibkraft ohne Aktivierung der Bremsbelagmasse (2) bereitstellt.

3. Bremsbelag (1) nach einem der vorhergehenden Ansprüche, wobei die Bremsbelagmasse (2) das unterstützende Material (12) in einer Mehrzahl an zueinander beabstandeten Aktivierungsbereichen (11) aufweist.

4. Bremsbelag (1) nach einem der vorhergehenden Ansprüche, wobei die Aktivierungsbereiche (11) in einer zueinander versetzten Anordnung angeordnet sind, insbesondere wobei mindestens ein Aktivierungsbereich (11) als Karbidschicht ausgebildet ist.

5. Bremsbelag (1) nach einem der vorhergehenden Ansprüche, wobei die Aktivierungsbereiche (11) in Form von Schichten oder Linien oder Plättchen ausgebildet sind.

6. Bremsbelag (1) nach einem der vorhergehenden Ansprüchen, wobei die Aktivierungsbereiche (11) in Form von, vorzugsweise unterschiedlichen, Pulvern, granularen Medien oder vorgefertigten sich zweidimensional oder dreidimensional erstreckenden Körpern (15) ausgebildet sind.

7. Bremsbelag (1) nach einem der vorhergehenden Ansprüche, wobei der mindestens eine Aktivierungsbereich (11) ein Profil, insbesondere ein S-förmiges, ein bogenförmiges Profil, ein diagonales Profil, aufweist, welches sich durch das Verschleißvolumen erstreckt.

8. Bremsbelag (1) nach einem der vorhergehenden Ansprüche, wobei der mindestens eine Aktivierungsbereich (11) zur Bremsbelagmasse (2) einen unterschiedlichen Härtegrad und/oder eine unterschiedliche Wärmeleitfähigkeit aufweist.

9. Bremsbelag (1) nach einem der vorhergehenden Ansprüche, wobei die Aktivierungsbereiche (11) untereinander unterschiedliche Härtegrade und/oder unterschiedliche Wärmeleitfähigkeiten aufweisen.

10. Bremsbelag (1) nach einem der Ansprüche 7 bis 9, wobei der mindestens eine Aktivierungsbereich (11) eine Aktivierungsbereichsdicke (13) aufweist, welche konstant ist oder entlang einer Richtung, insbesondere entlang der Erstreckungsrichtung (6), variiert.

11. Verfahren zum Herstellen eines Bremsbelags (1) gemäß einem der vorhergehenden Ansprüche einer Bremse, insbesondere für ein Nutzfahrzeug, wobei das Verfahren folgende Schritte umfasst:
a) Einbringen einer Bremsbelagmasse (2) in eine Presse;
b) Anordnen eines Einbringmittels auf die Bremsbelagmasse (2), wobei das Einbringmittel mindestens einen Einbringbereich aufweist, in der ein eine Aktivierung unterstützendes Material (12) eingebracht wird;
c) Entfernen des Einbringmittels aus der Presse;
d) anschließendes Ausformen der Bremsbelagmasse (2) mit dem unterstützenden Material (12) unter Druck und/oder Hitze.

12. Konditionierverfahren zur, insbesondere thermischen oder mechanischen, Aktivierung eines Bremsbelages (1) gemäß einem der Ansprüche 1 bis 10 eines Nutzfahrzeuges (16), wobei das Nutzfahrzeug (16) ein elektronisches Bremssystem mit mindesten ein Steuermodul (18) zum Ausführen einer elektronisch gesteuerten Bremsung umfasst, wobei das Konditionierverfahren folgenden Schritt umfasst:
- Anlegen eines vorbestimmten Druckes an den Bremsbelag (1) zum Ausführen der elektronisch gesteuerten Bremsung, wobei durch den vorbestimmten Druck eine vorbestimmte Reibtemperatur in den Bremsbelag (1) zum Konditionieren eines vorbestimmten Reib- und/oder Verschleißverhaltens des Bremsbelages (1) eingetragen wird.

13. Konditionierverfahren nach Anspruch 12, wobei das Anlegen des vorbestimmten Druckes über das mindestens eine Steuermodul (18) bei einer vorbestimmten Geschwindigkeit und/oder für die Dauer eines definierten Zeitintervalls ausgeführt wird.

14. Konditionierverfahren nach Anspruch 12 oder 13, wobei die die vorbestimmte Reibtemperatur mittels mindestens eines Sensors (19), insbesondere mittels eines Temperatur- oder eines Drucksensors, erfasst wird.

15. Nutzfahrzeug mit einer Bremse und einem elektronischen Bremssystem zum Ausführen einer elektronisch gesteuerten Bremsung, wobei das elektronische Bremssystem mindesten ein Steuermodul (18) umfasst, welches dazu konfiguriert ist, eine Bremsung gemäß einem Konditionierverfahren nach einem der Ansprüche 12 bis 14 auszuführen.

## Claims

1. A brake lining (1) of a brake, in particular for a utility vehicle, comprising:
a brake lining mass (2) with a predetermined friction coefficient, which after an activation, in particular thermal or mechanical activation, has a desired friction and/or wear behaviour and provides a wear volume; and
preferably a bonding layer (10) arranged below the brake lining mass (2) for connecting the brake lining mass (2) to a lining back plate (7),
- wherein the brake lining mass (2) has at least one activation region (11) with a supporting material (12) supporting the activation of the brake lining mass (2),
**characterised in that** the brake lining (1) additionally has an outer layer (9) with a predetermined coefficient of friction,
wherein the outer layer (9) is suitable for generating a predetermined first frictional force during, in particular first, braking operations,
wherein the outer layer (9) has a degree of hardness and/or a thermal conductivity and/or a coefficient of friction corresponding to that of the at least one activation region (11).

2. The brake lining (1) according to claim 1, wherein the supporting material (12) has a further coefficient of friction deviating from the coefficient of friction of the brake lining mass (2) and provides a friction force without activation of the brake lining mass (2).

3. The brake lining (1) according to any one of the preceding claims, wherein the brake lining mass (2) comprises the supporting material (12) in a plurality of activation regions (11) spaced apart from one another.

4. The brake lining (1) according to any one of the preceding claims, wherein the activation regions (11) are arranged in an offset arrangement with respect to one another, in particular wherein at least one activation region (11) is formed as a carbide layer.

5. The brake lining (1) according to any one of the preceding claims, wherein the activation regions (11) are in the form of layers or lines or pads.

6. The brake lining (1) according to any one of the preceding claims, wherein the activation regions (11) are in the form of, preferably different, powders, granular media or prefabricated bodies (15) extending two-dimensionally or three-dimensionally.

7. The brake lining (1) according to any one of the preceding claims, wherein the at least one activation region (11) has a profile, in particular an S-shaped, an arc-shaped profile, a diagonal profile, which extends through the wear volume.

8. The brake lining (1) according to any one of the preceding claims, wherein the at least one activation region (11) has a different degree of hardness and/or a different thermal conductivity to the brake lining mass (2).

9. The brake lining (1) according to any one of the preceding claims, wherein the activation regions (11) have different degrees of hardness and/or different thermal conductivities relative to one another.

10. The brake lining (1) according to one of the claims 7 to 9, wherein the at least one activation region (11) has an activation region thickness (13) which is constant or varies along a direction, in particular along the direction of extension (6).

11. A method of manufacturing a brake lining (1) according to one of the preceding claims of a brake, in particular for a utility vehicle, the method comprising the following steps:
a) inserting a brake lining mass (2) into a press;
b) placing an insertion means on the brake lining mass (2), the insertion means having at least one insertion zone in which a supporting material (12) supporting an activation is introduced;
c) removing the insertion means from the press;
d) subsequent forming of the brake lining mass (2) with the supporting material (12) under pressure and/or heat.

12. A conditioning method for, in particular thermal or mechanical, activation of a brake lining (1) according to any one of claims 1 to 10 of a utility vehicle (16), wherein the utility vehicle (16) comprises an electronic braking system with at least one control module (18) for carrying out electronically controlled braking, the conditioning method comprising the following step:
- applying a predetermined pressure to the brake lining (1) to carry out the electronically controlled braking, wherein a predetermined friction temperature is registered into the brake lining (1) by the predetermined pressure for conditioning a predetermined friction and/or wear behaviour of the brake lining (1).

13. The conditioning method according to claim 12, wherein the application of the predetermined pressure via the at least one control module (18) is carried out at a predetermined speed and/or for the duration of a defined time interval.

14. The conditioning method according to claim 12 or 13, wherein the predetermined friction temperature is detected by means of at least one sensor (19), in particular by means of a temperature or a pressure sensor.

15. A utility vehicle with a brake and an electronic braking system for carrying out electronically controlled braking, wherein the electronic braking system comprises at least one control module (18) which is configured to carry out braking in accordance with a conditioning method according to one of claims 12 to 14.

## Revendications

1. Garniture de frein (1) d'un frein, en particulier pour un véhicule utilitaire, comprenant
une masse de garniture de frein (2) avec un coefficient de friction prédéterminé qui, après activation en particulier par voie thermique ou mécanique, présente un comportement de friction et/ou d'usure souhaité et fournit un volume d'usure ; et
de préférence une couche de liaison (10) disposée sous la masse de garniture de frein (2) pour relier la masse de garniture de frein (2) à une plaque arrière de garniture (7),
- la masse de garniture de frein (2) présentant au moins une zone d'activation (11) avec un matériau (12) qui soutient l'activation de la masse de garniture de frein (2),
**caractérisée en ce que**
la garniture de frein (1) comprend en supplément une couche extérieure (9) ayant un coefficient de friction prédéterminé, la couche extérieure (9) étant appropriée pour générer une première force de friction prédéterminée pendant les opérations de freinage, en particulier pendant les premières opérations de freinage,
la couche extérieure (9) ayant un degré de dureté et/ou une conductivité thermique et/ou un coefficient de friction qui correspond à celui/celle de ladite au moins une zone d'activation (11).

2. Garniture de frein (1) selon la revendication 1,
dans laquelle
le matériau de soutien (12) présente un autre coefficient de friction différent du coefficient de friction de la masse de garniture de frein (2) et fournit une force de friction sans activation de la masse de garniture de frein (2).

3. Garniture de frein (1) selon l'une des revendications précédentes,
dans laquelle
la masse de garniture de frein (2) présente le matériau de soutien (12) dans une pluralité de zones d'activation (11) espacées les unes des autres.

4. Garniture de frein (1) selon l'une des revendications précédentes,
dans laquelle
les zones d'activation (11) sont disposées de manière décalée les unes par rapport aux autres,
en particulier au moins une zone d'activation (11) est réalisée sous forme de couche de carbure.

5. Garniture de frein (1) selon l'une des revendications précédentes,
dans laquelle
les zones d'activation (11) sont réalisées sous forme de couches ou de lignes ou de plaquettes.

6. Garniture de frein (1) selon l'une des revendications précédentes,
dans laquelle
les zones d'activation (11) sont réalisées sous la forme de poudres, de milieux granuleux ou de corps préfabriqués (15), de préférence différents, s'étendant en deux ou trois dimensions.

7. Garniture de frein (1) selon l'une des revendications précédentes,
dans laquelle
ladite au moins une zone d'activation (11) présente un profil, en particulier un profil en forme de S, un profil en forme d'arc, un profil en diagonale, qui s'étend à travers le volume d'usure.

8. Garniture de frein (1) selon l'une des revendications précédentes,
dans laquelle
ladite au moins une zone d'activation (11) présente un degré de dureté différent et/ou une conductivité thermique différente de celui/celle de la masse de garniture de frein (2).

9. Garniture de frein (1) selon l'une des revendications précédentes,
dans laquelle
les zones d'activation (11) présentent différents degrés de dureté et/ou différentes conductivités thermiques les unes par rapport aux autres.

10. Garniture de frein (1) selon l'une des revendications 7 à 9,
dans laquelle
ladite au moins une zone d'activation (11) présente une épaisseur de zone d'activation (13) qui est constante ou qui varie le long d'une direction, en particulier le long de la direction d'extension (6).

11. Procédé de fabrication d'une garniture de frein (1) d'un frein selon l'une des revendications précédentes, en particulier pour un véhicule utilitaire, le procédé comprenant les étapes suivantes consistant à :
a) introduire une masse de garniture de frein (2) dans une presse ;
b) disposer un moyen d'introduction sur la masse de garniture de frein (2), le moyen d'introduction présentant au moins une zone d'introduction dans laquelle est introduit un matériau (12) soutenant une activation ;
c) retirer les moyens d'introduction hors de la presse ;
d) ensuite conformer la masse de garniture de frein (2) avec le matériau de soutien (12) sous pression et/ou à chaud.

12. Procédé de conditionnement pour l'activation, en particulier par voie thermique ou mécanique, d'une garniture de frein (1) d'un véhicule utilitaire (16) selon l'une des revendications 1 à 10, le véhicule utilitaire (16) comprenant un système de freinage électronique avec au moins un module de commande (18) pour effectuer un freinage à commande électronique, le procédé de conditionnement comprenant l'étape suivante consistant à :
- appliquer une pression prédéterminée sur la garniture de frein (1) afin d'effectuer le freinage à commande électronique,
dans lequel
une température de friction prédéterminée est appliquée dans la garniture de frein (1) par la pression prédéterminée pour conditionner un comportement de friction et/ou d'usure prédéterminé de la garniture de frein (1).

13. Procédé de conditionnement selon la revendication 12,
dans lequel
l'application de la pression prédéterminée via ledit au moins un module de commande (18) est effectuée à une vitesse prédéterminée et/ou pour la durée d'un intervalle temporel défini.

14. Procédé de conditionnement selon la revendication 12 ou 13,
dans lequel
la température de friction prédéterminée est détectée au moyen d'au moins un capteur (19), en particulier au moyen d'un capteur de température ou de pression.

15. Véhicule utilitaire ayant un frein et un système de freinage électronique pour effectuer un freinage à commande électronique,
dans lequel
le système de freinage électronique comprend au moins un module de commande (18) configuré pour effectuer un freinage selon un procédé de conditionnement selon l'une quelconque des revendications 12 à 14.
